# EUROPEAN PATENT APPLICATION

(11) **EP 4 306 855 A1**
(43) Date of publication of application: **17.01.2024**
(21) Application number: 23386036.0
(22) Date of filing: 17.05.2023
(51) Int. Cl.: F24D 3/08, F24D 11/02, F24D 17/02, F24F 5/00

(54) **HEAT PUMP SYSTEM WITH DOUBLE EXCHANGER TANK**

(30) Priority: 13.07.2022 GR 20220100555
(71) Applicant: Clima Control Commercial Societe Anonyme Heating Systems and Air Conditioning, 57 008 Ionia, Thessaloniki (GR)
(72) Inventor: MASMANDIS, Georgios, 57200 Lagkadas Thessaloniki (GR); MASMANDIS, Neoklis, 57200 Lagkadas Thessaloniki (GR)
(74) Representative: Panagiotidou, Effimia

(57) **Abstract**

The invention constitutes a heat pump system for space heating, space cooling and domestic hot water production, with a double heat exchanger tank, incorporating a refrigerant circuit (A') and 2 water circuits, namely a hydraulic space heating/cooling circuit (B') and a hydraulic domestic hot water production circuit (C'). The system includes a double heat exchanger tank (4), which combines the function of a buffer tank with the function of a heat exchanger. Inside the tank there is water, in the lower part of the tank there is a first internal heat exchanger (7), preferably spiral, which is supplied with refrigerant, while in the upper part of the tank (4) there is a second heat exchanger (8), also preferably spiral, which is supplied with domestic water for use.

## Description

The invention belongs to the field of space cooling, space heating and domestic hot water production, in particular using heat pumps.

In the current state of the art there are many methods of implementing the heating and hot water system using a heat pump. The individual installer is required to select the method and implementation components that suit the heat pump model and the installation. In particular, the connection of the devices and their desired characteristics, for example, tank volume, boiler heat exchanger surface area, etc., should be selected.

In more detail, in the current state of the art there are two hydraulic circuits: 1^{st}) of heating and 2^{nd}) of domestic hot water.

The heat pump feeds both circuits, one at a time, and this is selected by means of a three-way valve.

In the first circuit, that of the heating, there is: A) the heat pump, B) the space heat exchangers (radiators, fan coil, underfloor) and C) in most cases a buffer tank is recommended or required.
A) The heat pump, works by heating its refrigerant, which is led to the internal heat exchanger where it exchanges heat with the water of the heating circuit and with a built-in circulation pump it has, circulates the water in the heating circuit.
B) In the space heat exchangers (radiators, fan coil, underfloor) the water circulates with the help of the built-in circulation pump (or the additional circulation pump, see below under C), delivering heat to the space, the water goes to the buffer tank and continues the cycle.
C) As far as the buffer tank is concerned, its use is not always necessary, but it helps to normalize the operation of the heat pump as well as in defrosting. The minimum volume of the tank - or its necessity - depends mainly on the power of the heat pump, the minimum desired operating period of the heat pump, the amount of water in the installation and the power output of the installation, quantities which, if not correctly estimated by the technician, will have an impact on the performance of the system. The buffer tank can be connected in two main ways, 1) to the return of the heating water or 2) in parallel with the heat pump to isolate it hydraulically from the installation. In the 2nd case an additional circulation pump is needed, which is placed after the buffer tank. There are other ways of connection and in general all possible connection schemes can be found, which is up to the correct choice of the installer.

In the second circuit, that of the hot water supply, there is: A) the heat pump and B) the boiler, which consists of a hot water tank with an integrated hot water heat exchanger.
A) The heat pump operates by heating its refrigerant, which is led to the internal heat exchanger where it exchanges heat with the domestic hot water circuit water.
B) This water is circulated to the boiler's hot water heat exchanger, through which the water in the hot water tank (boiler) is heated. The volume of the tank/boiler depends on the estimated domestic hot water demand, and the domestic hot water heat exchanger, whether separate or integrated into the boiler, must have sufficient heat exchange capacity at the water temperature conditions specified by the heat pump manufacturer.
If the tank/boiler is fed by an externally mounted domestic hot water heat exchanger, a second circulation pump shall be included in the circuit in addition to the integrated circulation pump.

The above current technique presents the following technical problem: considerable space is required for all of the above devices as well as technicians' working time to connect all of the devices together. In addition, the wiring and selection of these devices vary depending on the installer and there is a risk of incorrect selection or connection of the devices. The above technical problems bring additional cost, complexity and space requirements to the installation and use of such a heating and domestic hot water production system.

In addition, solutions proposed for this problem can be found in the following documents:
- EP 87420080.1: The invention of EU 87420080.1 solves the technical problem of domestic hot water production, whether there is a simultaneous need for space heating or space cooling, while the present invention achieves a reduction in the volume of the heating and hot water production system. More specifically, while in document EU 87420080.1 two separate tank-heat exchangers are used, one for storage of domestic hot water and one for space water, in the present invention only one tank-heat exchanger is used for both uses.
- US201100005257A1: This document relates to a frame to which components comprising a heat pump are attached. One of these components may be a secondary refrigerant-water heat exchanger for the production of domestic hot water (desuperheater). In contrast to the present invention, in US201100005257A1, on the one hand, independent production of domestic hot water is not provided, on the other hand, desuperheaters are connected between the compressor and the main exchanger (condenser) and do not operate autonomously. Moreover, they can only be used in heating systems where the inlet water temperature is required to be significantly lower than the domestic hot water temperature. If a tank is used to store the hot water from the desuperheater, then there is the additional difference in system volume and integration.
- GB 2572654 A: Like the previous document, GB 2572654 A shows a use of desuperheater for supplementary production of domestic hot water.
- US 2014/0245770 A1: This document presents an invention that uses three different heat exchangers: an external air/refrigerant heat exchanger, an internal air/refrigerant heat exchanger for space heating/cooling, and a water/refrigerant heat exchanger for water heating. In US 2014/0245770 A1, the water/refrigerant heat exchanger may be used for space heating exclusively or for domestic hot water exclusively, unlike the present invention, which contains a refrigerant/water heat exchanger for space heating/cooling and a water/water heat exchanger for domestic hot water. Furthermore, the present invention does not use an air/refrigerant heat exchanger for space heating/cooling.
- EU 18887637.9: Relates to a heat pump system, the compressor of which is powered by an internal combustion engine.
- WO 2012/041323 A2: The document describes a space heating and domestic hot water system with a heat pump and solar panels, with energy storage in the form of a buffer tank which is separate from the heat pump. This means that a refrigerant/water heat exchanger is used to heat the water in the circuit; then a water pump (circulation pump) is used to circulate it to and from the buffer tank. Finally, space heating requires a second circulation pump to move the water from the buffer tank to the space. In contrast to the above, the present invention incorporates the buffer tank, the domestic hot water heat exchanger and the main heat exchanger, in a single device. Thus, there is no need to operate the circulation pump to produce domestic hot water and a second circulation pump is not used for space heating.

There are the following disadvantages in the solutions proposed by the current technique, both in the heating circuit and in the domestic hot water circuit.

In terms of space: space is needed for the following separate components: 1) external buffer tank; 2) external domestic hot water tank; and 3) domestic hot water heat exchanger and domestic hot water circulation pump , if the former is not integrated in the boiler.

In terms of cost: the above separate components add to the cost of the overall system.

In terms of installation difficulties: it is necessary to select and connect these external devices, which requires a correct choice of external devices so that they are interoperable and compatible with each other.

The present invention, constitutes a product that integrates three devices and improves their operation with each other, as well as their usability.

In a brief disclosure, the invention is a system comprising a dual heat exchanger tank, which combines the function of a buffer tank, with the function of heat exchangers. Inside the container is water. In addition, inside the container, in the lower part thereof, there is a first heat exchanger, preferably a spiral heat exchanger, which is permeated by a refrigerant. In addition, inside the tank, in its upper part, there is a second heat exchanger, also preferably spiral, which is supplied with domestic water. Finally, the tank has four connections, a space flow connection, a space return connection, a cold domestic water inlet connection and a domestic hot water outlet connection.

Alternatively, the same inventive concept can be implemented, with an additional domestic hot water heat exchanger placed outside the aforementioned container. It is noted that in this alternative embodiment, the invention could even work with one of the two domestic hot water heat exchangers, either the internal or the external one. In the case of using both domestic hot water heat exchangers, the heat exchange capacity of the system for producing domestic hot water is increased. Therefore, the maximum possible domestic hot water supply is increased.
Thus, the invention manages and integrates in a single double heat exchanger tank, the three separate components used in the current technique, namely: 1) the main refrigerant-water heat exchanger; 2) the buffer tank; and 3) the hot water tank/boiler; so as to have all the advantages offered by these components, but with a significantly reduced volume footprint, because it uses the same energy store for two uses: either for space heating or for hot water production.

The advantages of the heat pump system with a double heat exchanger tank invention, are manifold.

In terms of volume, the total required volume of the system is significantly reduced. This is because the invention, and thus the overall system, can operate even with the volume of water required by only one buffer tank. In contrast, in the present technique the volume of the buffer tank is required, but also the volume of the boiler.

### Operation as a buffer tank:

The dual heat exchanger tank invention offers the thermal energy storage capability that all buffer tanks offer.

In terms of connection, the integration of the internal heat exchanger into the buffer tank is a novelty. The overall hydraulic circuit and heat transfer is simplified. Thus, it also improves the efficiency compared to connecting the tank in parallel, as no circulation pump operation is required to heat the buffer tank.

Hot water operation: Integrated hot water generation is not found in heat pumps because their main heat exchangers do not have significant thermal inertia and so there is a risk of many short cycling cycles, which for heat pumps is particularly detrimental to their efficiency and lifetime. In addition, the power of a domestic heat pump does not allow it to deliver domestic hot water directly without the use of some form of energy storage.

The double heat exchanger tank invention solves this problem, as the double heat exchanger tank has a high thermal inertia due to the amount of water it contains (at least 40 litres) and the energy stored in it allows the smooth production of domestic hot water.

Compared to the current technique, the invention is overall more efficient, particularly in applications where it is used for heating and domestic hot water, as the same energy storage within the dual heat exchanger container is used for both uses, the amount of time it remains unused is reduced and the losses involved are reduced.

### Ensuring correct installation:

A very important characteristic of the system is the heat exchange capacity of the domestic hot water heat exchanger, i.e. its power. Heat pumps operate at lower water temperatures than oil/gas boilers. This means that in order for a heat pump boiler to work, it must have a larger heat exchange surface area than was previously common in order to have the necessary heat exchange capacity under the operating conditions specified by the manufacturer. However, this is difficult to check by the installer and is often overlooked in the design. This can lead to overheating problems in the heat pumps and the water in the tank may not heat up sufficiently. With the dual heat exchanger tank invention, it is ensured that the domestic hot water heat exchanger has sufficient heat exchange capacity for proper operation with the heat pump.

Other advantages: Particle build-up in hydraulic circuits over time often causes problems, restricting the flow of water to the heat exchangers and other components. With the double heat exchanger tank invention, it becomes possible to clean these particles by means of an installed drain valve in the double heat exchanger tank.

The drawings accompanying the present invention show, in brief, the following:
Figure 1. General embodiment diagram of the heat pump system of the invention with a double heat exchanger tank.
Figure 2. Operation of the invention double heat exchanger container for space heating.
Figure 3. Operation of the invention double heat exchanger tank for domestic hot water production.
Figure 4. Operation of the invention double heat exchanger tank for space cooling.
Figure 5. General diagram of the embodiment of the invention heat pump system with double heat exchanger tank, with external hot water heat exchanger and recirculation layout.
Figure 6. Operation of the invention double heat exchanger container for space heating, with external hot water heat exchanger and recirculation layout.
Figure 7. Operation of the invention double heat exchanger tank for domestic hot water production, with external domestic hot water heat exchanger and recirculation layout.
Figure 8. Operation of the invention double heat exchanger tank for space cooling, with external domestic hot water heat exchanger and recirculation layout.
Figure 9. System illustration of current state of the art.

The invention heat pump system with a double heat exchanger tank heat pump system is identified by the Claims.

The inventive concept is described in detail below, with reference to the attached drawings, the main embodiment and a variant embodiment.

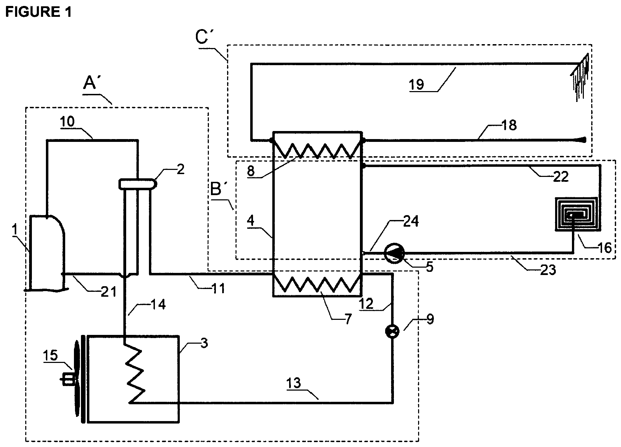

Figures 1-4 illustrate the preferred embodiment of the invention.

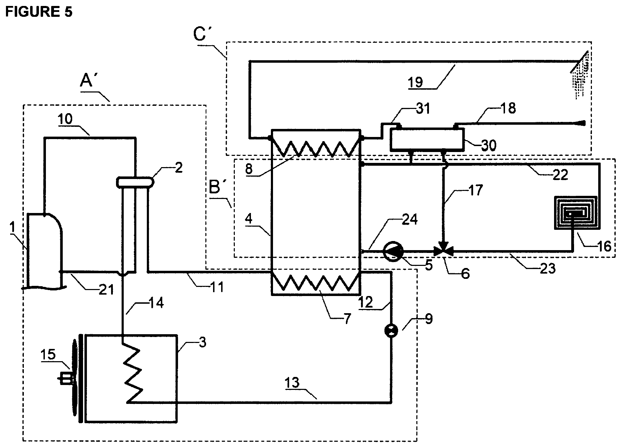

Figures 5-8 illustrate an embodiment of the invention with an external domestic hot water heat exchanger and recirculation layout

In each of the embodiments, reference is made to the drawings in order:
- the general diagram;
- the diagram in heating mode;
- the diagram in domestic hot water production mode; and
- the diagram in cooling mode.
Figure 1. General diagram of an embodiment of the invention heat pump system with a double heat exchanger tank.

Figure 1 illustrates the heat pump system with a double heat exchanger tank, incorporating a refrigerant circuit (A') and 2 water circuits, namely a hydraulic space heating/cooling circuit (B') and a hydraulic hot water production circuit (C').

The refrigerant circuit (A') comprises a compressor assembly (1); a four-way valve (2); an internal heat exchanger (7) integrated in the double heat exchanger tank (4); an expansion valve (9); and an external heat exchanger (3).

The refrigerant circuit (A') can perform a heating or cooling function of the double heat exchanger tank (4). The water of the double heat exchanger tank (4) can be used for space heating/cooling or for the production of domestic hot water.

The compressor assembly (1) includes a refrigerant accumulator and an oil-refrigerant separator.

The external heat exchanger (3) condenses or evaporates the refrigerant. The refrigerant is in principle in gas form. In the example embodiment of the inventive concept illustrated in the drawings, the external heat exchanger (3) comprises an air heat exchanger which exchanges heat between the refrigerant and the air. However, the same inventive idea can be implemented with a water heat exchanger, which exchanges heat between the refrigerant and water, which transfers heat, in the case of a geothermal heat pump.

In case the external heat exchanger (3) is implemented as an air heat exchanger, then it is accompanied by a fan assembly (15) to force more air flow through the external heat exchanger (3).

The fan assembly (15) comprises a number of fans as well as the motors for operating them.

The external heat exchanger (3) is connected to the expansion valve (9) via an expansion valve - external heat exchanger connection piping (13).

An internal heat exchanger-expansion valve connection piping (12) connects the internal heat exchanger (7) to the expansion valve (9).

The internal heat exchanger (7) condenses or evaporates the refrigerant as it transfers heat between the refrigerant and the water in the double heat exchanger tank (4).

The four-way valve (2) allows the refrigerant to pass in sequence through the compressor assembly (1), the internal heat exchanger (7), the expansion valve (9) and the external heat exchanger (3) or to pass in sequence through the compressor assembly (1), the external heat exchanger (3), the expansion valve (9) and the internal heat exchanger (7). Depending on whether the refrigerant circuit (A') is in the heating or cooling mode of the double heat exchanger tank (4), the position of the four-way valve (2) is determined.

The four-way valve (2) is connected to the compressor assembly (1) via a space flow piping (22) and a compressor exhaust pipe (10), is connected to the internal heat exchanger (7) via a four-way valve - internal heat exchanger connection piping (11) and is connected to the external heat exchanger (3) via an external heat exchanger - four-way valve connection piping (14).

The space heating/cooling hydraulic circuit (B') consists of the double heat exchanger tank (4), the heating or cooling space flow piping (22), the space heat exchanger (16), the space heating or cooling return piping (23), the circulation pump (5) and the circulation pump piping (24).

The double heat exchanger tank (4) contains the internal heat exchanger (7) and the integrated domestic hot water heat exchanger (8). It also contains water, which transfers heat between the double heat exchanger tank (4) and the space heat exchanger (16). The dimensions and volume of the double heat exchanger tank (4) depend on the desired design power of the invention.

The domestic hot water production hydraulic circuit (C') consists of the water supply piping (18), the integrated domestic hot water heat exchanger (8) and the domestic hot water supply piping (19).

In Figure 1, the integrated domestic hot water heat exchanger (8), preferably having a spiral shape, is located within the double heat exchanger tank (4) and exchanges heat with the water contained in the double heat exchanger tank (4).

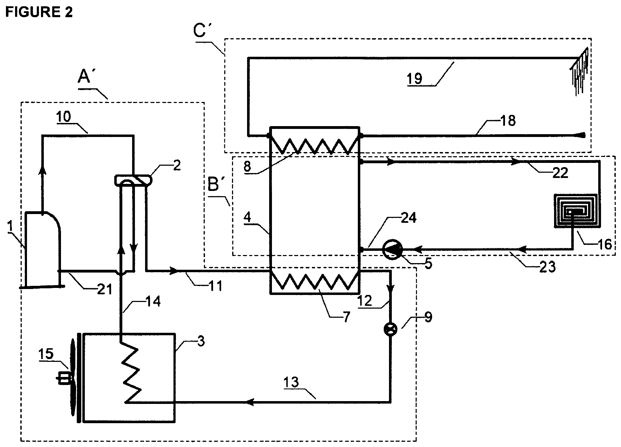

Figure 2. Operation of the invention heat pump system with a double heat exchanger tank for space heating.

Figure 2 illustrates the flow of refrigerant and water for the space heating operation.

For the space heating operation the following is carried out: the compressor assembly (1) is activated; the four-way valve (2) is activated in heating mode; the fan assembly (15) of the external heat exchanger (3) is activated; and the circulation pump (5) is activated.

When the compressor assembly (1) is activated, the refrigeration cycle starts: the refrigerant, in gaseous state, compressed by the compressor assembly (1), circulates through the compressor exhaust pipe (10) to the four-way valve (2). Then, through the four-way valve - internal heat exchanger connection piping (11), the refrigerant circulates to the internal heat exchanger (7) where it exchanges heat with the water of the double heat exchanger tank (4), is cooled and condensed. The refrigerant then flows through the internal heat exchanger-expansion valve connection piping (12) to the expansion valve (9), where it expands and then through the expansion valve - external heat exchanger connection piping (13) to the external heat exchanger (3) where it exchanges heat with ambient air, is heated and evaporates. From there, the refrigerant flows through the external heat exchanger - four-way valve connection piping (14) to the four-way valve (2), then through the compressor suction piping (21), enters the compressor assembly (1) and continues the cycle.

In the space hydraulic circuit (B'), upon activation of the circulation pump (5), the circuit water flows to the double heat exchanger tank (4), exchanges heat with the refrigerant through the internal heat exchanger (7) and is heated. It then flows through the space heating or cooling flow piping (22) to the space heat exchanger (16) through which it transfers heat to the space and is cooled. Finally, the water returns through the space heating or cooling return piping (23) and the circulation pump (5) to the double heat exchanger tank (4) and continues the cycle.

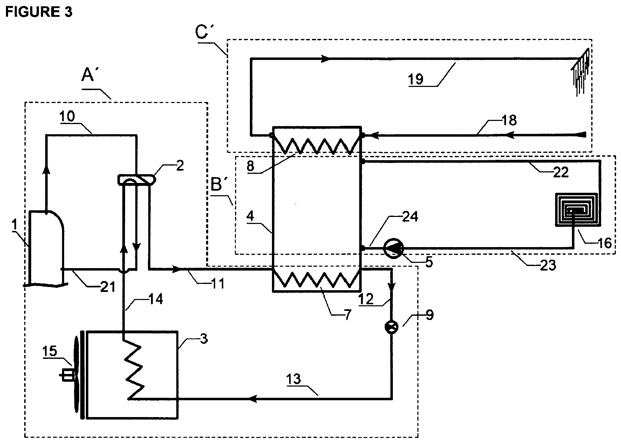

Figure 3. Operation of the invention heat pump system with double heat exchanger tank for domestic hot water production.

Figure 3 illustrates the flow of refrigerant and water for the production of domestic hot water.

For the domestic hot water production operation the following is carried out: the compressor assembly (1) is activated; the four-way valve (2) is activated in heating mode; and the fan assembly (15) of the external heat exchanger (3) is activated. The circulation pump (5) is switched off.

When the compressor assembly (1) is activated, the refrigeration cycle starts: the refrigerant, in gaseous state, compressed by the compressor assembly (1), circulates through the compressor exhaust pipe (10) to the four-way valve (2), then, through the four-way valve - internal heat exchanger connection piping (11), the refrigerant circulates to the internal heat exchanger (7) where it exchanges heat with the water of the double heat exchanger tank (4), is cooled and condensed. The refrigerant then flows through the internal heat exchanger-expansion valve connection piping (12) to the expansion valve (9), where it expands and then through the expansion valve - external heat exchanger connection piping (13) is led to the external heat exchanger (3) where it exchanges heat with ambient air, is heated and evaporates. From there, the refrigerant flows through the external heat exchanger - four-way valve connection piping (14) to the four-way valve (2), then through the compressor suction piping (21), enters the compressor assembly (1) and continues the cycle.

There is no forced water flow in the space hydraulic circuit (B'). The water contained in the double heat exchanger tank (4) exchanges heat with the refrigerant through the internal heat exchanger (7) and is heated.

For the production of domestic hot water with circuit (C'), the water entering through the water supply piping (18) into the integrated domestic hot water heat exchanger (8) exchanges heat with the water contained in the double heat exchanger tank (4) and is heated. It then flows to be used through a domestic hot water supply piping (19).

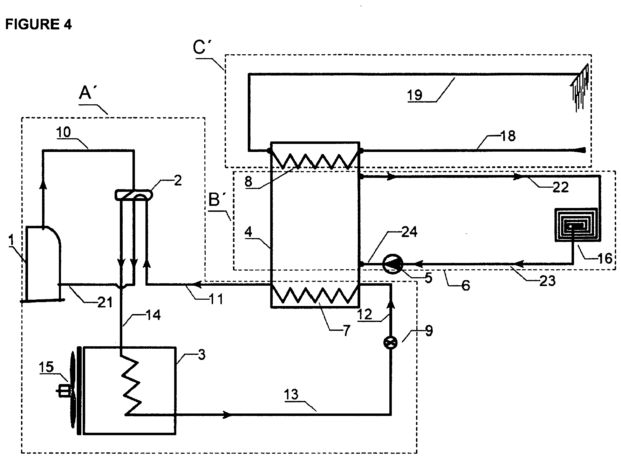

Figure 4. Operation of the invention heat pump system with double heat exchanger tank for space cooling.

Figure 4 illustrates the flow of refrigerant and water during space cooling operation.

For the space cooling operation the following is carried out: the compressor assembly (1) is activated; the four-way valve (2) is activated in cooling mode; the fan assembly (15) of the external heat exchanger (3) is activated; and the circulation pump (5) is activated.

When the compressor assembly (1) is activated, the refrigeration cycle starts: the refrigerant, in the gaseous state, compressed by the compressor assembly (1), circulates through the compressor exhaust pipe (10) to the four-way valve (2), then, through the external heat exchanger - four-way valve connection piping (14), the refrigerant circulates to the external heat exchanger (3), in which it exchanges heat with the ambient air, is cooled and condensed. The refrigerant then flows through the expansion valve - external heat exchanger connection piping (13) to the expansion valve (9), where it is discharged and then through the internal heat exchanger-expansion valve connection piping (12) is led to the internal heat exchanger (7) where it exchanges heat with the water in the double heat exchanger tank (4), is heated and evaporates. From there, the refrigerant flows through the four-way valve - internal heat exchanger connection piping (11) to the four-way valve (2), then through the compressor suction piping (21), enters the compressor assembly (1) and continues the cycle.

In the space hydraulic circuit (B'), upon activation of the circulation pump (5), the circuit water flows to the double heat exchanger tank (4), exchanges heat with the refrigerant through the internal heat exchanger (7) and is cooled. It then flows through the space heating or cooling flow piping (22) to the space heat exchanger (16) through which it absorbs heat from the space and is heated while the space is cooled. Finally, the water returns through the space heating or cooling return piping (23) and the circulation pump (5) to the double heat exchanger tank (4) and continues the cycle.
Figure 5. General embodiment diagram of the heat pump system of the invention with double heat exchanger tank, with external hot water heat exchanger and bypass layout.

In a variant embodiment of the same inventive concept, the invention further comprises the components: a three-way valve (6); an external domestic hot water heat exchanger (30); a domestic hot water heat exchanger connection piping (31); and a bypass piping (17), which connects the heating or cooling space flow piping (22) to the space heating or cooling return piping (23) via a three-way valve (6).

Like the embodiment of Figure 1, this embodiment incorporates a refrigerant circuit (A') and 2 water circuits, namely a space heating/cooling hydraulic circuit (B') and a domestic hot water hydraulic circuit (C').

In this embodiment there are differences in the space heating/cooling hydraulic circuit (B') and the domestic hot water hydraulic circuit (C').

As far as the space heating/cooling circuit (B') is concerned: the external domestic hot water heat exchanger (30) is connected to the heating or cooling space flow piping (22) and the bypass piping (17). The three-way valve (6) connects the circulation pump (5) either to the bypass piping (17) or to the space heating or cooling return piping (23), depending on the desired function. The three-way valve (6) thus forces the water to circulate either through the space heat exchanger (16) or through the bypass piping (17).

As regards the domestic hot water production circuit (C'): the external domestic hot water heat exchanger (30) is connected to the water supply piping (18). The hot water heat exchanger connection piping (31) connects the external domestic hot water heat exchanger (30) to the integrated domestic hot water heat exchanger (8).

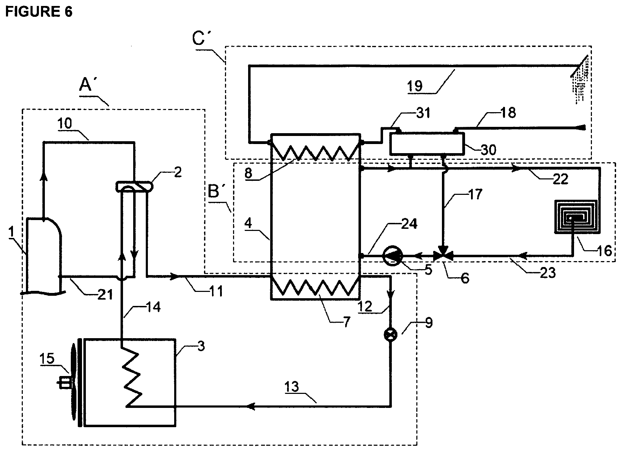

Figure 6. Operation of the invention heat pump system with double heat exchanger tank for space heating with external domestic hot water heat exchanger and bypass layout.

Figure 6 describes the flow of refrigerant and water during space heating operation under the embodiment of Figure 5.

During the space heating mode, the following takes place: the compressor assembly (1) is activated; the four-way valve (2) is activated in heating mode; the fan assembly (15) of the external heat exchanger (3) is activated; the circulation pump (5) is activated; and the three-way valve (6) is activated in space mode, i.e. it allows the water to flow to the double heat exchanger tank (4) only through the space heating or cooling return piping (23).

When the compressor assembly (1) is activated, the refrigeration cycle starts: the refrigerant, in gaseous state, compressed by the compressor assembly (1), circulates through the compressor exhaust pipe (10) to the four-way valve (2). Then, through the four-way valve - internal heat exchanger connection piping (11), the refrigerant circulates to the internal heat exchanger (7) where it exchanges heat with the water of the double heat exchanger tank (4), is cooled and condensed. The refrigerant then flows through the internal heat exchanger-expansion valve connection piping (12) to the expansion valve (9), where it expands and then through the expansion valve - external heat exchanger connection piping (13) to the external heat exchanger (3) where it exchanges heat with ambient air, is heated and evaporates. From there, the refrigerant flows through the external heat exchanger - four-way valve connection piping (14) to the four-way valve (2), then through the compressor suction piping (21), enters the compressor assembly (1) and continues the cycle.

In the space hydraulic circuit (B'), upon activation of the circulation pump (5), the circuit water flows to the double heat exchanger tank (4), exchanges heat with the refrigerant through the internal heat exchanger (7) and is heated. It then flows through the heating or cooling space flow piping (22) to the space heat exchanger (16) through which it transfers heat to the space and is cooled. Finally, the water returns through the space heating or cooling return piping (23), the three-way valve (6) and the circulation pump (5) to the double heat exchanger tank (4) and continues the cycle.

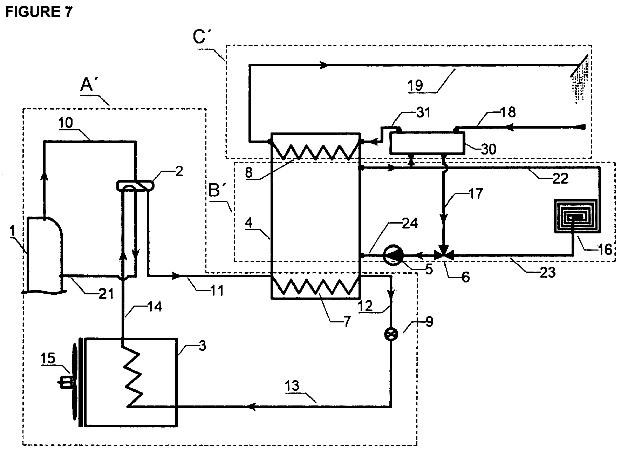

Figure 7. Operation of the invention heat pump system with double heat exchanger tank for domestic hot water production with external hot water heat exchanger and bypass layout.

Figure 7 describes the flow of the refrigerant and water during the production of domestic hot water under the embodiment of Figure 5.

During the domestic hot water production mode the following takes place: the compressor assembly (1) is activated; the four-way valve (2) is activated in heating mode; and the fan assembly (15) of the external heat exchanger (3) is activated. In addition, the circulation pump (5) is activated and the three-way valve (6) is activated in domestic hot water mode, i.e. it allows the water to flow to the double heat exchanger tank (4) only through the bypass piping (17).

When the compressor assembly (1) is activated, the refrigeration cycle starts: the refrigerant, in gaseous state, compressed by the compressor assembly (1), circulates through the compressor exhaust pipe (10) to the four-way valve (2), then, through the four-way valve - internal heat exchanger connection piping (11), the refrigerant circulates to the internal heat exchanger (7) where it exchanges heat with the water of the double heat exchanger tank (4), is cooled and condensed. The refrigerant then flows through the internal heat exchanger-expansion valve connection piping (12) to the expansion valve (9), where it expands and then through the expansion valve - external heat exchanger connection piping (13) to the external heat exchanger (3) where it exchanges heat with ambient air, is heated and evaporates. From there, the refrigerant flows through the external heat exchanger - four-way valve connection piping (14) to the four-way valve (2), then through the compressor suction piping (21), enters the compressor assembly (1) and continues the cycle.
The flow of water in the hydraulic circuit of the space (B') is as follows: the water flows through the circulation pump (5) to the double heat exchanger tank (4), exchanges heat with the refrigerant through the internal heat exchanger (7) and is heated. It then flows in turn to the external hot water heat exchanger (30), the bypass piping (17), the three-way valve (6) and through the circulation pump (5) back to the double heat exchanger tank (4) and continues the cycle.

To produce domestic hot water with the circuit (C'), the domestic water entering through the water supply piping (18) to the external domestic hot water heat exchanger (30) exchanges heat with the water from the circuit (B') that flows through it and is heated. The domestic water then flows through the domestic hot water heat exchanger connection piping (31) to the integrated service hot water heat exchanger (8) where it exchanges heat with the water contained in the double heat exchanger tank (4) and is further heated. Finally, it flows to be used through a hot water supply piping (19).

It is shown herein how the invention achieves greater heat exchange and thus a greater possible supply of domestic hot water.

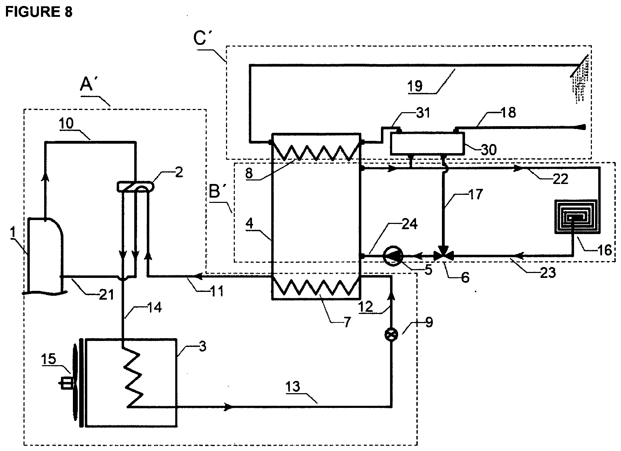

Figure 8. Operation of the invention heat pump system with double heat exchanger tank for space cooling with external hot water heat exchanger and bypass layout.

Figure 8 describes the flow of the refrigerant and water during the space cooling operation under the embodiment of Figure 5.

For the space cooling mode, the following takes place: the compressor assembly (1) is activated; the four-way valve (2) is activated in cooling mode; the fan assembly (15) of the external heat exchanger (3) is activated; the circulation pump (5) is activated; and the three-way valve (6) is activated in space mode, i.e. it allows the water to flow to the double heat exchanger tank (4), only through the space heating or cooling return piping (23).

When the compressor assembly (1) is activated, the refrigeration cycle starts: the refrigerant, in the gaseous state, compressed by the compressor assembly (1), circulates through the compressor exhaust pipe (10) to the four-way valve (2), then, through the external heat exchanger - four-way valve connection piping (14), the refrigerant circulates to the external heat exchanger (3), in which it exchanges heat with the ambient air, is cooled and condensed. The refrigerant then flows through the expansion valve - external heat exchanger connection piping (13) to the expansion valve (9), where it is discharged and then through the internal heat exchanger-expansion valve connection piping (12) is led to the internal heat exchanger (7) where it exchanges heat with the water in the double heat exchanger tank (4), is heated and evaporates. From there, the refrigerant flows through the four-way valve - internal heat exchanger connection piping (11) to the four-way valve (2), then through the compressor suction piping (21), enters the compressor assembly (1) and continues the cycle.

In the space hydraulic circuit (B'), upon activation of the circulation pump (5), the circuit water flows to the double heat exchanger tank (4), exchanges heat with the refrigerant through the internal heat exchanger (7) and is cooled. It then flows through the space heating or cooling flow piping (22) to the space heat exchanger (16) through which it absorbs heat from the space and is heated while the space is cooled. Finally, the water returns through the space heating or cooling return piping (23), the three-way valve (6) and the circulation pump (5) to the double heat exchanger tank (4) and continues the cycle.

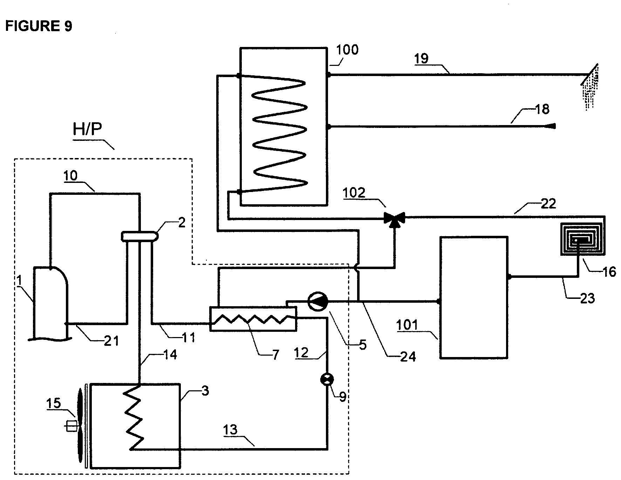

Figure 9. Illustration of current technique system.

Compared to the invention, the following differences can be observed in the current technique.

In place of the present invention, double heat exchanger tank, the present technique uses the components: 1) the heat pump internal heat exchanger (7), which is a refrigerant/water heat exchanger and is located inside the heat pump; 2) the buffer tank (101), which is located outside the heat pump and in this design is located on the return from the installation; 3) the hot water tank (100), which is located outside the heat pump, 4) a three-way valve (102) for selecting the space heating/cooling or hot water mode.

Heating/cooling mode: The compressor assembly (1) and the fan assembly (15) are activated. The three-way valve is set to space mode, i.e. it allows the water to flow to the internal heat exchanger (7) only via the for space heating or cooling return piping (23), and the circulation pump (5) is activated. The four-way valve (2) is set to the heating or cooling position accordingly.

The refrigeration cycle is carried out in the usual way by transferring heat from the external heat exchanger (3) to the internal heat exchanger (7) or vice versa.

The water in the hydraulic circuit flows from the buffer tank (101) through the circulation pump (5) to the internal heat exchanger (7) where it exchanges heat with the refrigerant. The water in the hydraulic circuit then flows through the three-way valve (102) to the space heat exchanger (16) where it gives off or absorbs heat. Finally, the hydraulic circuit water returns to the buffer tank (101) and repeats the cycle.

Domestic hot water production mode: the compressor assembly (1) and the fan assembly (15) are activated. The three-way valve is set in space mode i.e. it allows the water to flow to the internal heat exchanger (7) only through the hot water tank (100), and the circulation pump (5) is activated. The four-way valve (2) is set to the heating position.

The refrigeration cycle is carried out in the usual way by transferring heat from the external heat exchanger (3) to the internal heat exchanger (7).

The water in the hydraulic circuit flows from the hot water tank (100) through the circulation pump (5) to the internal heat exchanger (7) where it absorbs heat from the refrigerant and is heated. It is then directed to the three-way valve (102) and through it to the hot water tank (100). Passing through the heat exchanger of the hot water tank (100), the water in the hydraulic circuit transfers heat to the service water contained therein and heats it. Finally, the water of the hydraulic circuit returns through the circulation pump (5) to the internal heat exchanger (7) from where it can repeat the cycle.

It follows from the above that the double heat exchanger tank invention combines the functions of the components: internal heat exchanger (7), hot water tank (100) and buffer tank (101). In addition, the component: three-way valve (102) is not required.

The invention finds application in any place where heat pumps are used, such as homes, shops, professional, industrial, craft and factory premises.

All parts illustrated in the drawings are individually assigned a reference number and the corresponding terms of these numbers are listed as follows:
A' refrigerant circuit;
B' space heating/cooling hydraulic circuit;
C' domestic hot water production hydraulic circuit;
H/P - Heat pump;
   (1) Compressor assembly;
   (2) four-way valve;
   (3) external heat exchanger;
   (4) double heat exchanger tank;
   (5) circulation pump;
   (6) three-way valve;
   (7) internal heat exchanger;
   (8) integrated domestic hot water heat exchanger;
   (9) expansion valve;
   (10) compressor exhaust pipe;
   (11) four-way valve - internal heat exchanger connection piping;
   (12) internal heat exchanger- expansion valve connection piping
   (13) expansion valve - external heat exchanger connection piping;
   (14) external heat exchanger - four-way valve connection piping
   (15) fan assembly;
   (16) space heat exchanger;
   (17) bypass piping;
   (18) water supply piping;
   (19) domestic hot water supply piping;
   (21) compressor suction piping;
   (22) space flow piping;
   (23) space return piping
   (24) circulation pump piping;
   (30) external domestic hot water heat exchanger;
   (31) hot water heat exchanger connection piping;
   (100) hot water tank;
   (101) buffer tank;
   (102) three-way valve;

## Claims

1. A space heating, space cooling and domestic hot water production heat pump system, incorporating a refrigerant circuit (A'), a space heating/cooling hydraulic circuit (B') and a domestic hot water production hydraulic circuit (C'),
wherein the refrigerant circuit (A') includes a compressor assembly (1) with a refrigerant accumulator and an oil-coolant separator, an external heat exchanger (3), which condenses or evaporates the refrigerant and contains an air heat exchanger, which exchanges heat between the refrigerant and the air and is accompanied by a fan assembly (15), a four-way valve (2) connected to the compressor assembly (1) by means of a compressor suction piping (21) and an exhaust pipe (10), an expansion valve (9), an expansion valve - external heat exchanger connection piping (13), and an external heat exchanger - four-way valve connection piping (14) to the external heat exchanger (3),
wherein the space heating/cooling hydraulic circuit (B') comprises a heating or cooling space flow piping (22), a space heat exchanger (16), a space heating or cooling return piping (23), a circulation pump (5) and a circulation pump piping (24),
wherein the domestic hot water production hydraulic circuit (C') comprises a water supply pipe (18) and a domestic hot water supply piping (19);
**characterised in that**
the refrigerant circuit (A') has:
- a double heat exchanger tank (4), having in its lower part an internal heat exchanger (7), which is permeated by refrigerant and condenses or evaporates the refrigerant by transferring heat between the refrigerant and the water contained in the double heat exchanger tank (4);
**in that**
the space heating/cooling hydraulic circuit (B') has
- the double heat exchanger tank (4) with the internal heat exchanger (7), which tank contains water, transferring heat between the tank (4) and the space heat exchange device (16) via the heating or cooling space flow piping (22) and the space heating or cooling return piping (23);
**and in that**
the hydraulic circuit for the production of domestic hot water (C')
- has an integrated domestic hot water heat exchanger (8), which is integrated in the double exchanger tank (4) in the upper part thereof, is supplied with domestic water and exchanges heat with the water contained in the double heat exchanger tank (4),
- has a water supply pipe (18) connected to the integrated domestic hot water heat exchanger (8),
- has a hot water supply piping (19) connected to the integrated hot water heat exchanger (8) for discharging the water for use.

2. A heat pump system for space heating, space cooling and domestic hot water production, comprising a double heat exchanger tank according to claim 1, **characterised in that:**
the space heating/cooling hydraulic circuit (B') further comprising:
- a bypass piping (17) connecting the space heating or cooling flow piping (22) to the space heating or cooling return piping (23) via a three-way valve (6) connecting the circulation pump (5) either to the bypass piping (17), or to the space heating or cooling return piping (23), depending on the desired function,
**and in that** the domestic hot water production hydraulic circuit (C') additionally includes:
- an external domestic hot water heat exchanger (30) mounted outside the double heat exchanger tank (4), which is connected to the water supply piping (18) and to the heating or cooling space return piping (23) and the bypass piping (17), and
- connection tubing (31) connecting the external domestic hot water heat exchanger (30) to the integrated domestic hot water heat exchanger (8).

3. A heat pump system for the production of space heating, space cooling and domestic hot water, comprising a double exchanger tank according to claim 1 or 2, **characterized in that** the double heat exchanger tank (4) contains at least 40 litres of water.

4. A heat pump system for the production of space heating, space cooling and domestic hot water, comprising a double exchanger tank according to claims 1 or 2 and 3, **characterized in that** the internal heat exchanger (7) which is permeated by refrigerant and the integrated domestic hot water heat exchanger (8) which is permeated by domestic hot water have a spiral shape.
